# EUROPEAN PATENT APPLICATION

(11) **EP 4 632 286 A1**
(43) Date of publication of application: **15.10.2025**
(21) Application number: 23900765.1
(22) Date of filing: 04.01.2023
(51) Int. Cl.: F24H 3/08, F24H 9/1863, F24F 13/02, B60H 1/22, G01K 7/16

(54) **HEATING MODULE FOR AIR CIRCULATION SYSTEM**

(30) Priority: 06.12.2022 KR 20220168358
(71) Applicant: DSW Inc., Yongin-si, Gyeonggi-do 16953 (KR)
(72) Inventor: KIM, Jin Doo, Yongin-si, Gyeonggi-do 16950 (KR)
(74) Representative: Novitas Patent AB
(86) International application number: PCT/KR2023/000153
(87) International publication number: WO 2024/122738

(57) **Abstract**

The present invention relates to a heating module for an air circulation system, which is applied to a device for purifying and circulating air to instantaneously heat air flow along a circulation path so that the air can be used for heating. The present embodiment provides a heating module installed in an air circulation path of an air circulation system to heat circulating air, the heating module comprising: an upper housing and a lower housing which form a cylindrical shape and have a flow channel formed in the inner space thereof to allow air to flow therethrough; and a heater unit formed on the outer surface of the upper housing to transfer heat to the upper housing, wherein the heater unit includes: a heating plate which is in contact with the surface of the upper housing to dissipate heat to a predetermined area thereof; and a heat generation electrode layer having a conductive heat generation paste having a predetermined resistance, which is printed on the surface of the heating plate, to generate heat by electric power supplied from the outside.

## Description

### [Technical Field]

The present invention relates to an air circulation system, and more particularly, to a heating module for an air circulation system, which is applied to a device for purifying and circulating air to instantaneously heat air flow along a circulation path so that the air can be used for heating.

### [Background Art]

In general, an air circulation system installed in a building, a vehicle or the like refers to a ventilation system that purifies indoor air or exchanged indoor air with outdoor air to improve quality of the indoor air.

The air circulation system is also used for heating inside a room by including a heater for heating air when supplying purified air or outdoor air into the room.

In general, the heater used to heat the air includes a pipe type heater, which is called a sheath heater, or a linear heater in the form of a spring coil. These heaters are configured to be directly exposed to the air flow along a circulation path. Accordingly, the conventional air circulation system has a risk in that foreign substances such as dust contained in air may be stuck to a heater surface and burned by a high temperature, thereby causing soot or odor, and even causing a fire due to ignition.

In order to solve the above problems, the air purification system is operated by installing a filter before air flows into a heater unit to filter out foreign substances such as dust in advance. The approach of removing foreign substances using the filter may prevent the risk due to the foreign substances, but it is inconvenient to clean or replace the filter periodically. This is because air circulation efficiency may be decreased when the filter is clogged, and further, the heater may be heated rapidly, thereby causing the heater itself to break. Accordingly, the installation and operating costs of the air circulation system may be increased.

### [Disclosure]

### [Technical Problem]

The present invention is proposed to solve the above problems. An object of the present invention is to provide a heating module for an air circulation system to prevent direct contact between an actual heating unit of a heater and the flowing air, so that the problems caused by contact between foreign substances and the heater can be prevented.

In addition, an object of the present invention is to provide a heating module for an air circulation system, such that the installation and operating costs can be reduced without providing a separate filter member.

In addition, an object of the present invention is to provide a heating module for an air circulation system so as to improve a heat transfer structure, so that heating efficiency can be enhanced.

### [Technical Solution]

According to one embodiment of the present invention for solving the above-mentioned problems, a heating module installed in an air circulation path of an air circulation system to heat circulating air comprises: a housing including one or more components and assembled to form a duct and define an internal space formed with a flow channel through which air flows; and a heater unit formed on an outer surface of the housing to transfer heat to the housing.

The heater unit includes: a heat generation electrode layer in which a conductive heat generation material having a predetermined resistance is printed on the outer surface of the housing to generate heat by electric power supplied from an outside.

In addition, the housing may include a core portion protruding in a direction of the flow channel or a direction of the heat generation electrode layer, the core portion being configured to have an area equal to or larger than an area occupied by the heat generation electrode layer at a position in which the heat generation electrode layer is formed.

In addition, the heater unit may further include a resistance electrode layer in which a conductive heating material having a predetermined resistance is printed on the outer surface of the housing in a region where the heat generation electrode layer is not formed, to measure resistance according to a temperature.

In addition, according to another embodiment of the present invention for solving the above-mentioned problems, a heating module installed in an air circulation path of an air circulation system to heat circulating air comprises: a housing including one or more components and assembled to form a duct and define an internal space formed with a flow channel through which air flows; and a heater unit formed on an outer surface of the housing to transfer heat to the housing.

The heater unit may include: a heating plate configured to come into contact with the surface of the housing to dissipate heat to a predetermined area thereof; and a heat generation electrode layer in which a conductive heat generation material having a predetermined resistance is printed on the surface of the heating plate to generate heat by electric power supplied from an outside.

In addition, the housing may include a core portion protruding in a direction of the flow channel or a direction of the heating plate, the core portion being configured to have an area equal to or larger than an area of the heating plate at a position corresponding to the heating plate.

In addition, the core portion formed in the direction of the flow channel may have an inclined or curved shape with respect to an air flow direction.

In addition, the housing may include a plurality of heat dissipation fins being arranged in parallel with the air flow direction and at a predetermined interval on the inner surface in which the heater unit is positioned.

In addition, the heater unit may further include a resistance electrode layer in which a conductive heating material having a predetermined resistance is printed on the surface of the heating plate in a region where the heat generation electrode layer is not formed, to measure resistance according to a temperature.

In addition, the resistance electrode layer may be formed of a conductive material that is the same material as the heat generation electrode layer and is selectively operated as a resistance layer or a heat generation layer.

### [Advantageous Effects]

According to the heating module for the air circulation system of the present embodiment, the heater unit is prevented from coming into direct contact with the air flow through the flow channel, so that a damage or malfunction due to foreign substances such as dust to the heater unit can be prevented.

In addition, according to the heating module for the air circulation system of the present embodiment, the core portion and the heat dissipation fins formed on the inner surface of the upper housing are provided, so that the heating efficiency of air can be remarkably improved.

In addition, according to the heating module for the air circulation system of the present embodiment, a separate filter member is unnecessary, so that installation and operating costs can be reduced.

### [Description of Drawings]

FIG. 1 is a perspective view showing a heating module for an air circulation system according to the present embodiment.
FIG. 2 is a sectional view showing the heating module of FIG. 1.
FIG. 3 is a partial sectional view showing an internal structure of the heating module of FIG. 1.

### [Best Mode]

### [Mode for Invention]

Technical problems implemented by the present invention and practices of the present invention will be apparent from the preferred embodiments described as follows. Hereinafter, the preferred embodiments of the present invention will be described in detail with reference to the accompanying drawings.

It will be understood that differences in the embodiments described later are not mutually exclusive. In other words, it will be understood that the described specific shapes, structures and characteristics may be implemented in other embodiments with respect to one embodiment, and the positions or arrangements of individual components within each disclosed embodiment may be modified, without departing from the technical spirit and scope of the present invention. Similar reference numerals in the drawings denote the same or similar functions throughout several aspects, and the length, area, thickness and the like as well as the shape thereof may be exaggerated for convenience. In the description of the present embodiment, expressions such as up, down, front, back, first, second and the like indicate relative positions, directions, or orders, and their technical meanings are not bound by lexical meanings.

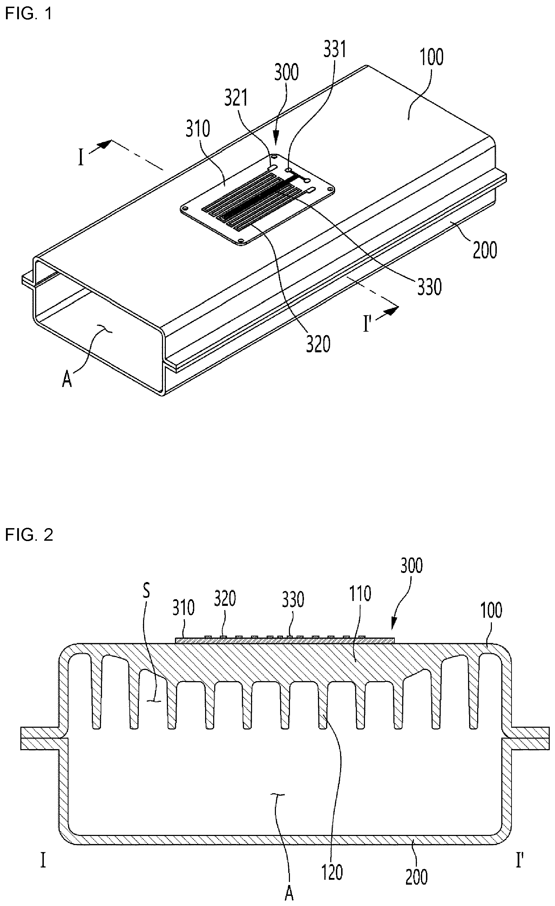

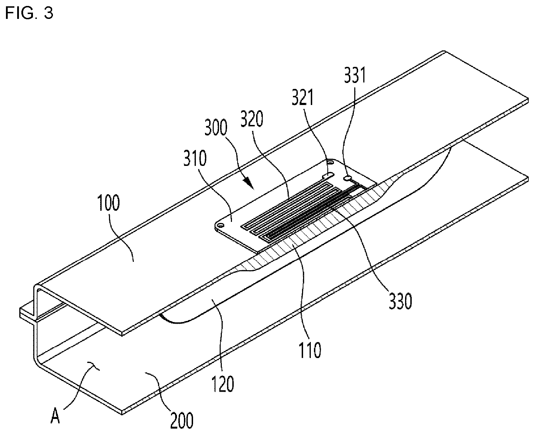

FIG. 1 is a perspective view showing a heating module for an air circulation system according to the present embodiment; FIG. 2 is a sectional view showing the heating module of FIG. 1; and FIG. 3 is a partial sectional view showing an internal structure of the heating module of FIG. 1.

The air circulation system to which the heating module of the present embodiment is applied may include various types of systems that forcefully circulate air for the purpose of air purification or heating, such as not only buildings or vehicles, but also air purifiers, heating devices, and dryers. In addition, the heating module of the present embodiment is mounted on an air circulation path of the air circulation system to heat circulating air.

Referring to FIGS. 1 to 3, the heating module of the present embodiment includes an upper housing 100, a lower housing 200, and a heater unit 300 mounted on a surface of the upper housing.

The upper housing 100 and the lower housing 200 are configured to form a body of the heating module and define a flow channel A through which air flows therein when combined with each other. The flow channel A defined thereby constitutes a part of the air circulating path within the air circulation system. Accordingly, the air circulating within the air circulation system passes through the flow channel A defined by the upper housing 100 and the lower housing 200, and is heated in this process.

The assembly of the upper housing 100 and the lower housing 200 may have various shapes, such as a cylindrical shape or a square cylinder shape. Accordingly, the flow channel A defined thereby may have a circular shape or a rectangular shape.

In addition, the upper housing 100 and the lower housing 200 may be configured as housings separated from each other and coupled to each other by a separate fastening member (not shown), or may be configured as single housing forming an integral body. When being configured as the integrated housing, the upper housing 100 and the lower housing 200 may be divided into the upper housing 100 and the lower housing 200 by an imaginary line.

In addition, the heating module is described with respect to the upper housing 100 and the lower housing 200 in the present embodiment, however, it may be expressed with a left housing or a right housing depending on a position or direction in which the heating module is mounted.

The upper housing 100 and the lower housing 200 are formed of a material having excellent thermal conductivity, and may be formed of, for example, an aluminum plate.

The heater unit 300 refers to a heating element mounted on an outer surface of the upper housing 100 and is configured to heat the upper housing 100 to heat air passing through an internal flow channel. The heater unit 300 of the present embodiment includes a heating plate 310 for dissipating heat, a heat generation electrode 320 formed on a surface of the heating plate, and a resistance electrode layer 330 formed in a region on the surface of the heating plate 310 without overlapping with the heat generation electrode 320.

The heating plate 310 is configured to allow heat generated from the heat generation electrode 320 to be dissipated to a region having a predetermined area, includes a plate having a predetermined area, and is coupled so as to come into contact with the surface of the upper housing 100. In addition, the heating plate 310 is formed of a material having excellent thermal conductivity, and may be configured as a rectangular plate formed of, for example, an SUS material.

The heat generation electrode 320 refers to a heating source for generating heat by converting electrical energy into thermal energy, and is formed by printing a conductive heating paste having a predetermined resistance on the surface of the heating plate 310. The heat generation electrode 320 may be formed into a zigzag shape having a band with a predetermined width and length, and have two ends provided with a pair of first electrode pads 321 coming into contact with an external power source, and the first electrode pad 321 is connected to an external power supply module (not shown).

The resistance electrode layer 330 is configured to measure resistance according to a temperature of the heating plate 310, and formed by printing a conductive heating paste having a predetermined resistance in a region without formation of the heat generation electrode layer 320, that is, on the surface of the heating plate 310 between the heat generation electrode layers 320.

In general, since the resistance also changes depending on temperature, the resistance of the heat generation electrode layer 320 changing according to the temperature of the heating plate 310 is measured through the resistance electrode layer 330, thereby controlling the power supplied to the heat generation electrode layer 320, so that the heating plate 310 for dissipating heat is heated to a predetermined constant temperature. To this end, the resistance electrode layer 330 may be formed by printing a conductive paste which is the same material as the heat generation electrode layer 320. Accordingly, based on resistance information measured in the resistance electrode layer 330, the heat generation electrode layer 320 may be prevented from rapidly generating heat to overheat the heating plate 310 or the heat generation electrode layer 320 may be prevented from generating insufficient heat to heat the heating plate 310 at a reference value or below, and the heating temperature of the air may be controlled simultaneously.

The resistance electrode layer 330 may be formed in a band shape having a predetermined width and length, and have two ends provided with a pair of second electrode pads 331 coming into contact with the external power source. The resistance electrode layer 330 is connected to an external resistance measurement module through the second electrode pads 331.

Meanwhile, the resistance electrode layer 330 may be used to measure the resistance of the heat generation electrode layer 320 to predict a heating temperature of the heating plate 310 or air, however, may also function as another heat generation electrode for heating the heating plate 310. The external power supply module may selectively supply electric power to the heat generation electrode layer 320 and the resistance electrode layer 330, or supply electric power to both of them to control the heating temperature of the heating plate 310. To this end, it is preferable that the resistance electrode layer 330 be formed of a conductive paste, which is the same material as the heat generation electrode layer 320, and have a different area from the heat generation electrode layer 320, for example, a relatively narrow area. The resistance electrode layer 330 is further connected to the external power supply module through the second electrode pads 331.

The heat generation electrode layer 320 and the resistance electrode layer 330 are configured by the conductive paste formed by printing, so that the heating plate 310 may be reused by washing the printing layer even when a defect occurs during the printing process. Accordingly, waste of resources due to defects in the manufacturing process can be minimized and environmental pollution can be prevented.

The upper housing 100 receives heat from the heater unit 300 having the above configuration to heat the air, and includes a core portion 110 and heat dissipation fins 120 in order to efficiently absorb the heat of the heating plate 310 and efficiently release the absorbed heat.

Referring to FIGS. 2 and 3, the upper housing 100 has the core portion 110 protruding into the flow channel A through which the air flows. The core portion 110 is configured to rapidly absorb and store the heat of the heating plate 310, and protrudes inward to have an area equal to or larger than an area corresponding to the heating plate 310. In other words, the core portion 110 has a thickness thicker than a plate forming the upper housing 100 therearound. Accordingly, since the heat generated from the heating plate 310 is transferred to an entire volume region of the core portion, a large amount of heat may be transferred.

In addition, the core portion 110 has a gentle inclination or a curved shape with respect to the air moving direction. The core portion 110 protrudes inward from the upper housing 100, and accordingly, may easily impede an air flow when protruding in a nearly vertical bulkhead shape. Accordingly, when it has the inclined or curved shape with respect to the air flow direction, the air flow may be prevented from being impeded.

In addition, the core portion 110 may also be formed to protrude outward from the upper housing 100. In other words, the core portion 110 may protrude outward from the upper housing 100, and the heater unit 300 may be mounted on the surface of the core portion 110.

In addition, the upper housing 100 includes a plurality of heat dissipation fins 120 formed in parallel with the direction in which the air flows. The heat dissipation fins 120 are spaced apart from each other at a predetermined interval, and narrow slit-shaped flow channels S are formed between the heat dissipation fins 120. The heat dissipation fins 120 greatly increase the area coming into contact with the air to rapidly heat a large amount of air, thereby improving the heating efficiency. Accordingly, the air flow through the flow channels S between the heat dissipation fins 120 may be rapidly heated.

Meanwhile, in the description of the present embodiment, the heater unit 300 is configured as an example in which the heat generation electrode layer 320 and the resistance electrode layer 330 are formed on the surface of the housing via the heating plate 310, however, may be formed directly on a surface of a metal housing. In other words, the heat generation electrode layer 320 and the resistance electrode layer 320 may be formed by printing a conductive heating material on the outer surface of the upper housing 100.

The core portion 110 may protrude in the direction of the flow channel or the direction of the heat generation electrode layer to have the area equal to or larger than the area occupied by the heat generation electrode layer 320.

Thus, according to the heating module for the air circulation system of the present embodiment, heat absorption from the heater unit 300 and heat release to the air are promoted by the core portion 110 and the heat dissipation fins 120 formed on the inner surface of the upper housing 100, so that the heating efficiency can be remarkably improved. In addition, the heater unit 300 is provided with the flow channel A formed on the outer surface of the upper housing 100, which does not come into direct contact with the flowing air, so that a damage or malfunction due to foreign substances such as dust to the heater unit 300 can be prevented. Accordingly, the heating module of the present embodiment can reduce the installation and operating costs of the air circulation system.

The exemplary embodiments of the present invention have been illustrated and described as above, but various modifications and other embodiments may be carried out by those skilled in the art. These modifications and the other embodiments are all intended to be considered and encompassed by the appended claims and do not depart from the true spirit and scope of the present invention.

## Claims

1. A heating module installed in an air circulation path of an air circulation system to heat circulating air, the heating module comprising:
a housing including one or more components and assembled to form a duct and define an internal space formed with a flow channel through which air flows; and
a heater unit formed on an outer surface of the housing to transfer heat to the housing, wherein
the heater unit includes a heat generation electrode layer in which a conductive heat generation material having a predetermined resistance is printed on the outer surface of the housing to generate heat by electric power supplied from an outside.

2. The heating module of claim 1, wherein the housing includes a core portion protruding in a direction of the flow channel or a direction of the heat generation electrode layer, the core portion being configured to have an area equal to or larger than an area occupied by the heat generation electrode layer at a position in which the heat generation electrode layer is formed.

3. The heating module of claim 2, wherein the heater unit further includes a resistance electrode layer in which a conductive heating material having a predetermined resistance is printed on the outer surface of the housing in a region where the heat generation electrode layer is not formed, to measure resistance according to a temperature.

4. A heating module installed in an air circulation path of an air circulation system to heat circulating air, the heating module comprising:
a housing including one or more components and assembled to form a duct and define an internal space formed with a flow channel through which air flows; and
a heater unit formed on an outer surface of the housing to transfer heat to the housing, wherein
the heater unit includes:
a heating plate configured to come into contact with the surface of the housing to dissipate heat to a predetermined area thereof; and
a heat generation electrode layer in which a conductive heat generation material having a predetermined resistance is printed on the surface of the heating plate to generate heat by electric power supplied from an outside.

5. The heating module of claim 4, wherein the housing includes a core portion protruding in a direction of the flow channel or a direction of the heating plate, the core portion being configured to have an area equal to or larger than an area of the heating plate at a position corresponding to the heating plate.

6. The heating module of claim 5, wherein the core portion formed in the direction of the flow channel has an inclined or curved shape with respect to an air flow direction.

7. The heating module of claim 6, wherein the housing includes a plurality of heat dissipation fins being arranged in parallel with the air flow direction and at a predetermined interval on an inner surface in which the heater unit is positioned.

8. The heating module of claim 7, wherein the heater unit further includes a resistance electrode layer in which a conductive heating material having a predetermined resistance is printed on the surface of the heating plate in a region where the heat generation electrode layer is not formed, to measure resistance according to a temperature.

9. The heating module of claims 4 or 8, wherein the resistance electrode layer is formed of a conductive material that is the same material as the heat generation electrode layer and is selectively operated as a resistance layer or a heat generation layer.
